# FASCICULE DE BREVET EUROPEEN

(11) **EP 0 908 828 B1**
(45) Date de publication et mention de la délivrance du brevet: **03.01.2007**
(21) Numéro de dépôt: 98402449.7
(22) Date de dépôt: 06.10.1998
(51) Int. Cl.: G06F 13/18

(54) **Procédé et système contrôle d'accès partagés à une mémoire vive**
Verteiltes Speicherzugriffsteuersystem und Verfahren
Distributed access control system for memory and method

(30) Priorité: 09.10.1997 FR 9712631
(43) Date de publication de la demande: 14.04.1999
(73) Titulaire: STMicroelectronics S.A., 92120 Montrouge (FR)
(72) Inventeur: Tournier, Christian, 38170 Seyssinet-Pariset (FR)
(74) Mandataire: Casalonga, Axel

(56) Documents cités:
- US-A- 4 181 933
- US-A- 4 313 161
- PATENT ABSTRACTS OF JAPAN vol. 11, no. 147 (P-575), 14 mai 1987 & JP 61 282954 A (HITACHI), 13 décembre 1986

## Description

L'invention concerne le contrôle d'accès partagés à une mémoire vive par plusieurs entités pouvant fonctionner de façon complètement asynchrone.

L'invention s'applique avantageusement mais non limitativement au domaine de la télévision. En effet, dans une telle application, les données affichées sur l'écran du téléviseur sont délivrées par un contrôleur d'écran après lecture d'une mémoire vive dont le contenu est le résultat d'un traitement logiciel effectué par un microprocesseur.

Or, les signaux d'horloge cadençant respectivement le contrôleur d'écran et le microprocesseur sont totalement asynchrones en fréquence et en phase et chacune de ces deux entités peut être susceptible de vouloir accéder à la mémoire à un même instant.

Une solution pour résoudre de tels accès partagés consiste à utiliser des mémoires dites "double accès", c'est-à-dire pour lesquelles deux entités sont capables aussi bien de lire ou d'écrire simultanément ou non dans chacune des cellules ou points mémoire de la mémoire. Or, une telle solution nécessite l'utilisation de mémoires de structure complexe et peut conduire à des dysfonctionnements dans certains cas spécifiques, en particulier lorsque l'une des entités souhaite écrire dans un point-mémoire alors que quasi sumultanément, l'autre entité souhaite lire ledit point-mémoire.

L'invention vise à apporter une solution radicalement différente au contrôle d'accès partagés à une même mémoire.

Ainsi, l'invention propose l'utilisation d'une mémoire vive simple accès, dont le partage n'est pas physique par différents accès (comme dans les mémoires double accès) mais temporel. Plus précisément, on effectue un partage temporel des demandes d'accès à la mémoire, et les accès partagés à la mémoire sont gérés par un séquenceur qui va segmenter le temps en fenêtres d'accès réservées de façon spécifique à chacune des entités utilisatrices de la mémoire. Le séquenceur est rythmé par une horloge choisie en fonction des priorités des différentes entités. Le signal d'horloge interne de l'entité la plus prioritaire sera celui qui rythmera le séquenceur. Enfin, une entité non prioritaire, ou auxiliaire, devra, à chacune de ses demandes d'accès, attendre que vienne sa prochaine fenêtre d'accès afin de lire ou stocker les données en cours de traitement.

En d'autres termes, telle que revendiquée, l'invention propose un procédé de contrôle d'accès partagés à une mémoire vive, dans lequel plusieurs entités périphériques cadencées respectivement par leur propre signal d'horloge interne, sont susceptibles d'accéder à ladite mémoire.

Selon une caractéristique générale de l'invention, la mémoire vive est une mémoire simple accès, c'est-à-dire à accès unique, et on définit une entité prioritaire parmi l'ensemble des entités périphériques, les autres entités étant définies comme étant des entités auxiliaires. On élabore une trame temporelle répétitive, rythmée par le signal d'horloge interne de l'entité prioritaire, cette trame étant subdivisée en fenêtres temporelles formant plusieurs groupes de fenêtres respectivement alloués aux entités périphériques. Et on autorise chaque entité périphérique à accéder à ladite mémoire uniquement au cours des fenêtres qui lui sont allouées.

Ainsi, dans une application de télévision, l'entité prioritaire sera avantageusement le contrôleur d'écran.

Certaines entités périphériques auxiliaires peuvent être de simples échantillonneurs de données. D'autres entités auxiliaires peuvent comporter une unité centrale de microprocesseur et des moyens d'entrée/sortie reliés à ladite mémoire et aptes à contenir une donnée devant être écrite dans la mémoire ou une donnée extraite de la mémoire et devant être lue par l'unité centrale. Dans ce cas, selon un mode de mise en oeuvre du procédé selon l'invention, en présence d'un signal de requête d'accès à la mémoire émis par l'unité centrale au cours d'une fenêtre temporelle qui ne lui est pas allouée, on valide la donnée présente dans les moyens d'entrée/sortie au cours de la prochaine fenêtre temporelle allouée à ladite unité centrale et on gèle le fonctionnement interne de l'unité centrale jusqu'à ladite validation.

L'invention a également pour objet un système de contrôle d'accès partagés à une mémoire vive.

Selon une caractéristique générale de l'invention, ce système comprend :
- une mémoire vive simple accès connectée sur un bus de données et un bus d'adresses,
- plusieurs entités périphériques, réparties en une entité prioritaire et en entités auxiliaires, cadencées respectivement par leur propre signal d'horloge interne. Chaque entité périphérique est apte à délivrer un signal de requête d'accès à la mémoire et comporte des moyens d'entrée/sortie, connectés sur les bus de données et d'adresses. Ces moyens d'entrée/sortie sont aptes à contenir une donnée extraite de la mémoire ou une donnée devant être écrite dans la mémoire. Ces moyens d'entrée/sortie possèdent par ailleurs un port de contrôle pour recevoir au moins un signal de validation de la donnée contenue dans les moyens d'entrée/sortie.

Le système selon l'invention comprend par ailleurs une interface de contrôle comportant un séquenceur rythmé par le signal d'horloge interne de l'entité prioritaire, de façon à élaborer une trame temporelle répétitive subdivisée en fenêtres temporelles formant plusieurs groupes de fenêtres respectivement alloués aux entités périphériques. L'interface comprend également des moyens de contrôle aptes en réponse à un signal de requête d'accès émanant d'une entité périphérique, à délivrer aux moyens d'entrée/sortie de cette entité le signal de validation de données uniquement au cours d'une fenêtre allouée à cette entité, autorisant ainsi l'accès de cette entité à la mémoire.

Lorsque l'une des entités auxiliaires comporte une unité centrale d'un microprocesseur, les moyens de contrôle comportent avantageusement des moyens d'inhibition aptes, en présence d'un signal de requête d'accès à la mémoire émis par l'unité centrale au cours d'une fenêtre temporelle qui ne lui est pas allouée, à geler le fonctionnement interne de l'unité centrale jusqu'à la réception du signal de validation de données.

Ce "gel" ou cette inhibition du fonctionnement de l'unité centrale peut se traduire par une interruption totale du fonctionnement de l'unité centrale ou bien par un gel ou un figeage du contenu des registres ou bascules internes de telle sorte qu'il n'y ait plus aucune évolution des données délivrées par ces bascules jusqu'à désactivation du signal de gel.

D'autres avantages et caractéristiques de l'invention apparaîtront à l'examen de la description détaillée d'un mode de réalisation et de mise en oeuvre, nullement limitatif, et des dessins annexés, sur lesquels :
la figure 1 est un synoptique schématique d'un système de contrôle d'accès partagés selon l'invention,
la figure 2 illustre une trame temporelle permettant le partage temporel des accès à la mémoire, et
la figure 3 illustre plus en détail, mais toujours de façon schématique, une partie du dispositif de la figure 1.

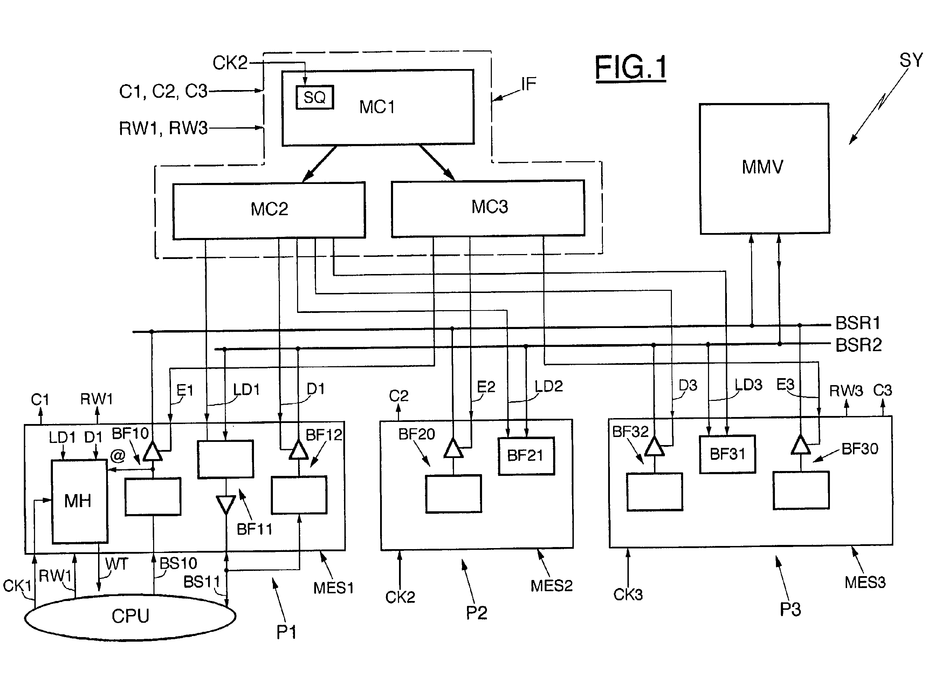

Sur la figure 1, la référence SY désigne d'une façon générale un système selon l'invention, permettant ici de contrôler les accès de trois entités périphériques, ou plus simplement périphériques, P1, P2 et P3, à une mémoire vive MMV.

L'un de ces périphériques, en l'espèce le périphérique P1, comporte dans l'exemple décrit, une unité centrale de microprocesseur CPU ainsi que des moyens d'entrée/sortie MES1 connectés sur le bus d'adresses BSR1 de la mémoire et sur le bus de données BSR2 de cette mémoire.

D'une façon classique, ces moyens d'entrée/sortie MES1 comportent un port de sortie BF10, connecté sur le bus d'adresses BSR1, comportant une mémoire tampon, connectée sur le bus d'adresses BS10 de l'unité centrale pour stocker une adresse. Ce port de sortie BF10 est commandé de façon classique par un signal de validation d'adresse E1 permettant de valider et de délivrer effectivement l'adresse sur le bus d'adresses BSR1 de la mémoire.

De même, les moyens d'entrée/sortie MES 1 comportent un port d'entrée de données BF11 comportant une mémoire tampon, connectée entre le bus de données B SR2 de la mémoire MV et le bus de données BS11 de l'unité centrale. Ce port d'entrée est commandé par un signal LD1 de validation de la donnée extraite de la mémoire MMV.

D'une façon analogue, pour l'écriture d'une donnée dans la mémoire MMV, les moyens MES 1 comportent un port de sortie de données BF12 commandé par un signal de validation de donnée D1 permettant d'écrire effectivement la donnée dans la mémoire MMV.

Ces moyens MES 1 comportent bien entendu un port de contrôle pour l'échange des différents signaux de validation E1, LD1, D1, mais aussi pour délivrer un signal C1 de requête d'accès à la mémoire et un signal RW1 représentatif du sens lecture/écriture.

Le deuxième périphérique P2, qui est par exemple dans une application de télévision, le contrôleur d'écran, comprend des moyens d'entrée/sortie MES2 comportant un port de contrôle et un port de sortie BF20, connecté sur le bus d'adresses BSR1 de la mémoire, comportant notamment un pointeur d'adresses et commandable par un signal de validation d'adresses E2. En outre, ces moyens d'entrée/sortie MES2 comportent ici uniquement un port d'entrée de données BF21 comportant une mémoire tampon, connectée sur le bus de données BSR2 de la mémoire et commandable par un signal de validation de données LD2.

Les moyens d'entrée/sortie MES3 du troisième périphérique P3 qui peut être par exemple un dispositif d'échantillonnage de données, comportent d'une façon analogue des ports de contrôle et de données BF31 et BF32 en lecture et en écriture, respectivement commandés par des signaux de validation LD3 et D3, ainsi qu'un port d'adresses BF30, commandé par un signal de validation E3 et comportant notamment un pointeur d'adresses.

Le système selon l'invention comporte également une interface IF permettant de contrôler et de gérer les accès à la mémoire MMV.

Matériellement, cette interface IF comporte des moyens de traitement qui peuvent être réalisés au moins partiellement de façon logicielle au sein d'un micro-contrôleur par exemple, ou bien par un circuit intégré spécifique (ASIC), soit encore par simple intégration matérielle ("hardware") dans le système (circuit intégré par exemple).

Sur la figure 1, on a décomposé fonctionnellement l'interface IF en un contrôleur principal MC1 comportant notamment un séquenceur SQ rythmé par le signal d'horloge de l'un des périphériques de façon à élaborer une trame temporelle répétitive dont on reviendra plus en détail ci-après sur la structure, et en un contrôleur du bus de données MC2 délivrant les signaux de validation de données LDi et/ou Di et en un contrôleur de bus d'adresses MC3 délivrant les signaux de validation d'adresses Ei.

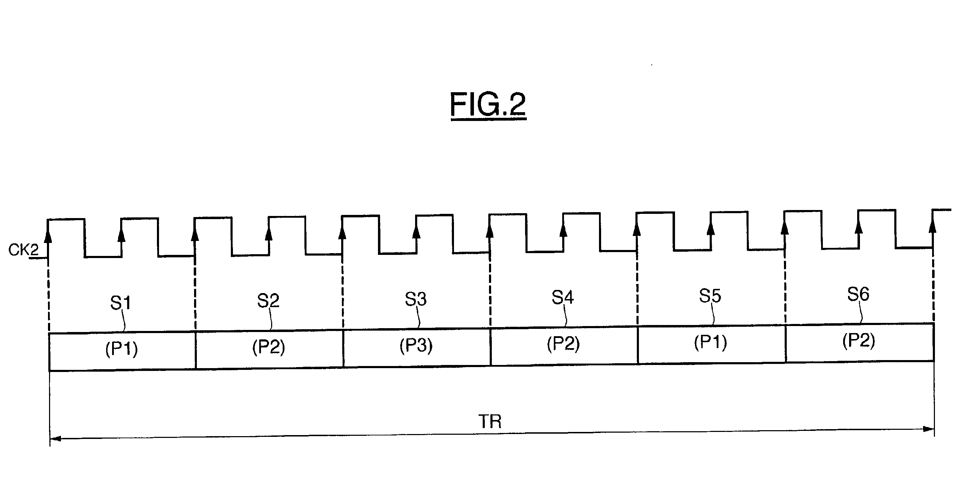

L'élaboration de la trame temporelle répétitive TR (figure 2) dépend du caractère prioritaire de l'un des périphériques. Plus précisément, on sélectionne parmi les entités périphériques P1, P2, P3, celle dont le traitement temps réel est le plus prioritaire, c'est-à-dire par exemple celle présentant le plus de contraintes temps réel.

Dans l'application spécifique de la télévision, le traitement temps réel prioritaire est celui gérant l'écran d'affichage de façon à ne pas détériorer la qualité et la stabilité de l'image affichée. C'est donc l'entité périphérique P2 correspondant au contrôleur d'écran, qui sera désignée comme étant l'entité prioritaire, les autres entités étant les entités auxiliaires.

En conséquence, la durée de la trame TR sera choisie ici comme étant la durée nécessaire pour afficher un caractère sur l'écran. Cette durée de trame TR correspond à un certain nombre de périodes du signal d'horloge CK2 du contrôleur d'écran. Ce nombre de périodes d'horloge est typiquement égal à 18, mais, à des fins de simplification, on n'en a représenté que 12 sur la figure 2.

On suppose par ailleurs, à des fins de simplification, que le traitement d'affichage proprement dit nécessite trois accès à la mémoire au cours de fenêtres temporelles S2, S4 et S6, ayant chacune une durée de deux périodes du signal d'horloge CK2.

Les fenêtres d'accès de l'entité prioritaire ayant été définies, on réserve les fenêtres d'accès restantes, à savoir les fenêtres S1, S3 et S5, aux autres entités périphériques. A titre indicatif, on alloue à l'unité centrale CPU les fenêtres S1 et S5, tandis que l'on alloue à l'entité périphérique P3 la fenêtre S3.

Le séquenceur de l'interface de contrôle est rythmé par le signal d'horloge CK2 de l'entité prioritaire. En conséquence, les demandes d'accès successives C2 émises par le périphérique P2 seront synchrones avec l'occurence des fenêtres temporelles S2, S4 et S6. Les signaux de validation d'adresses E2 et LD2 seront donc délivrés par les moyens de contrôle MC2 et MC3 au cours de ces fenêtres temporelles autorisant aussi l'accès du périphérique P2 à la mémoire MMV.

Par contre, en ce qui concerne les autres périphériques, et notamment le périphérique P3, si un signal de requête d'accès C3 est émis au cours d'une fenêtre temporelle qui n'est pas allouée à ce périphérique, par exemple la fenêtre S1, l'interface de contrôle ne délivrera le signal de validation d'adresses E3 et le signal de validation de données D3 ou LD3 en fonction de la valeur logique d'un signal RW3, qu'au cours de la prochaine fenêtre d'accès qui est allouée au périphérique P3, en l'espèce la fenêtre S3. Ainsi, le périphérique P3 n'aura effectivement accès à la mémoire MMV qu'au cours de la fenêtre S3 qui lui est allouée.

Le même principe est appliqué au périphérique P1 dans le cas où un signal de requête d'accès C1, associé à un signal de requête RW1 d'écriture ou de lecture, est émis par le périphérique P1 au cours d'une fenêtre temporelle d'accès qui ne lui est pas alloué. Cependant, il convient en outre de geler le fonctionnement interne de l'unité centrale CPU jusqu'à la réception du signal de validation LD1 ou D1 en fonction du sens lecture ou écriture.

A cet effet, l'interface de contrôle IF comporte des moyens d'inhibition MH que l'on a représentés ici à des fins de simplification à l'intérieur du bloc MES1.

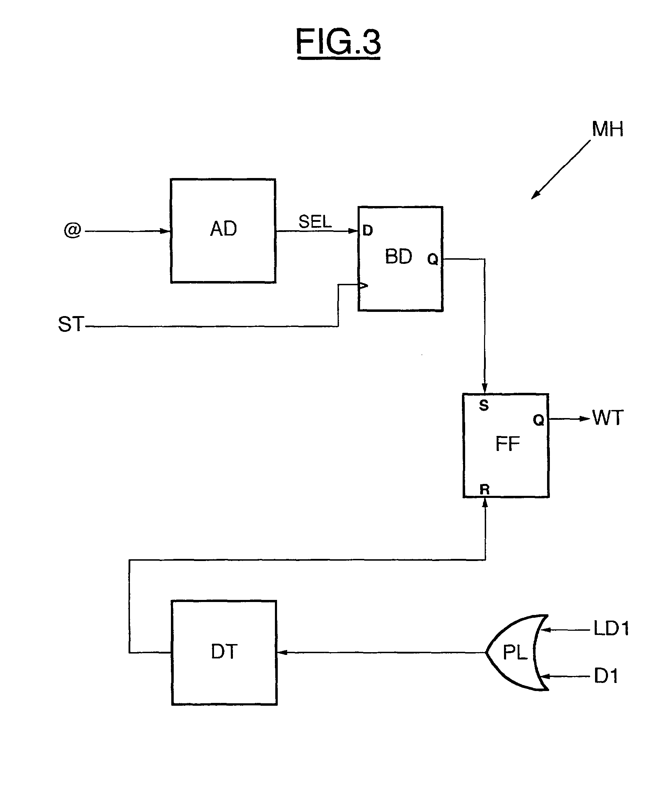

Plus précisément, comme illustré sur la figure 3, ces moyens d'inhibition MH comportent un décodeur d'adresses AD recevant l'adresse émise sur le bus BS10 de l'unité centrale et destiné à vérifier que cette adresse correspond bien à une adresse effective de la mémoire. Si tel est le cas, le signal SEL de sortie du décodeur passe au niveau logique "1" et est stocké dans une bascule référencée BD commandée par le signal de validation d'adresses ST délivré par l'unité centrale. Lorsque ce signal de validation d'adresses ST passe à 1, la sortie de la bascule BD qui est reliée à l'entrée d'une bascule de sortie FF (flip flop) fait passer la sortie de cette bascule FF à 1. Le signal logique correspondant WT, qui est délivré à l'unité centrale CPU, agit alors comme un signal de gel de cette unité centrale. Il convient de noter également que le passage du signal WT de l'état logique "0" à l'état logique "1" peut être utilisé comme une condition de génération du signal de requête d'accès C1.

Les moyens d'inhibition MH comportent par ailleurs un détecteur de transitions DT dont la sortie est reliée à l'entrée R de remise à zéro de la bascule de sortie FF, et dont l'entrée est reliée à la sortie d'une porte logique OU, référencée PL, et recevant en entrée les signaux de validation LD1 et D1.

L'émission par le contrôleur MC2 de l'interface de contrôle du signal de validation de données LD1 ou D1 (en fonction du sens lecture ou écriture requis), se traduit par une transition montante du signal correspondant. La détection de cette transition par le détecteur DT a pour effet de remettre la sortie de la bascule FF à zéro, c'est-à-dire de refaire passer à l'état bas le signal de gel WT, ce qui a pour conséquence de réactiver le fonctionnement interne de l'unité centrale CPU.

## Revendications

1. Procédé de contrôle des accès partagés à une mémoire vive, dans lequel plusieurs entités périphériques cadencées respectivement par leur propre signal d'horloge interne sont susceptibles d'accéder à ladite mémoire, **caractérisé par le fait que**, la mémoire vive (MMV) étant une mémoire simple accès, on définit une entité prioritaire (P2) parmi l'ensemble des entités périphériques, les autres entités (P1, P3) étant définies comme étant des entités auxiliaires, on élabore une trame temporelle répétitive (TR), rythmée par le signal d'horloge interne (CK2) de l'entité prioritaire, et subdivisée en fenêtres temporelles (S1-S6) formant plusieurs groupes de fenêtres respectivement alloués aux entités périphériques, et on autorise chaque entité périphérique à accéder à ladite mémoire uniquement au cours des fenêtres qui lui sont allouées.

2. Procédé selon la revendication 1, dans lequel l'une des entités auxiliaire (P1) comporte une unité centrale (CPV) d'un microprocesseur et des moyens d'entrée/sortie (MES1) reliés à ladite mémoire aptes à contenir une donnée devant être écrite dans la mémoire ou une donnée extraite de la mémoire et devant être lue par l'unité centrale, **caractérisé par le fait qu'**en présence d'un signal (C1) de requête d'accès à la mémoire émis par l'unité centrale au cours d'une fenêtre temporelle qui ne lui est pas allouée, on valide la donnée présente dans les moyens d'entrée/sortie au cours de la prochaine fenêtre temporelle allouée à ladite unité centrale, et on gèle le fonctionnement interne de l'unité centrale jusqu'à ladite validation.

3. Système de contrôle des accès partagés à une mémoire vive, **caractérisé par le fait qu'**il comprend
une mémoire vive simple accès (MMV) connectée sur un bus de données et un bus d'adresses,
plusieurs entités périphériques (P1-P3), réparties en une entité prioritaire et en entités auxiliaires, cadencées respectivement par leur propre signal d'horloge interne, aptes chacune à délivrer un signal de requête d'accès à la mémoire, et comportant chacune des moyens d'entrée/sortie, connectés sur les bus de données et d'adresses, contenant des moyens de stockage aptes à contenir une donnée extraite de la mémoire ou une donnée devant être écrite dans la mémoire, et possédant un port de contrôle pour recevoir au moins un signal de validation de la donnée contenue dans les moyens d'entrée/sortie,
et une interface (IF) comportant un séquenceur (SQ) rythmé par le signal d'horloge interne de l'entité prioritaire de façon à élaborer une trame temporelle répétitive subdivisée en fenêtres temporelles formant plusieurs groupes de fenêtres respectivement alloués aux entités périphériques, et des moyens de contrôle (MC1-MC3) aptes en réponse à un signal de requête d'accès émanant d'une entité, à délivrer aux moyens d'entrée/sortie de cette entité le signal de validation de donnée uniquement au cours d'une fenêtre allouée à cette entité, autorisant ainsi l'accès de cette entité à la mémoire.

4. Système selon la revendication 3, **caractérisé par le fait que** l'une (P1) des entités auxiliaires comporte une unité centrale d'un microprocesseur, **par le fait que** les moyens de contrôle comportent des moyens d'inhibition (MH) aptes, en présence d'un signal de requête d'accès à la mémoire émis par l'unité centrale au cours d'une fenêtre temporelle qui ne lui est pas allouée, à geler le fonctionnement interne de l'unité centrale jusqu'à la réception du signal de validation de donnée.

## Claims

1. Method for controlling shared accesses to a random access memory, in which process several peripheral entities clocked, respectively by their own internal clock signal, are capable of accessing the said memory, **characterized in that**, the random access memory (MMV) being a single-access memory, a priority entity (P2) is defined among the set of peripheral entities, the other entities (P1, P3) being defined as being auxiliary entities, a repetitive time frame (TR) is formulated, regulated by the internal clock signal (CK2) of the priority entity, and subdivided into time windows (S1-S6) forming several groups of windows, these groups being allocated respectively to the peripheral entities, and each peripheral entity is permitted to access the said memory only in the course of the windows which are allocated to it.

2. Method according to Claim 1, in which one of the auxiliary entities (P1) comprises a central processing unit (CPV) of a microprocessor and input/output means (MES1) which are linked to the said memory and are able to contain a datum which is to be written to the memory or a datum extracted from the memory and to be read by the central processing unit, **characterized in that** in the presence of a memory access request signal (C1) emitted by the central processing unit in the course of a time window which is not allocated to it, the datum present in the input/output means is enabled in the course of the next time window allocated to the said central processing unit, and the internal operation of the central processing unit is disabled until the said enabling.

3. System for controlling shared accesses to a random access memory, **characterized in that** it comprises
a single-access random access memory (MMV) connected to a data bus and an address bus,
several peripheral entities (P1-P3), distributed into a priority entity and into auxiliary entities, respectively clocked by their own internal clock signal, each able to deliver a memory access request signal, and each comprising input/output means, connected to the data and address buses, containing storage means able to contain a datum extracted from the memory or a datum required to be written to the memory, and possessing a control port for receiving at least one signal for enabling the datum contained in the input/output means,
and an interface (IF) comprising a sequencer (SQ) regulated by the internal clock signal of the priority entity in such a way as to formulate a repetitive time frame subdivided into time windows forming several groups of windows, these groups being respectively allocated to the peripheral entities, and control means (MC1-MC3) which are able, in response to an access request signal from an entity, to deliver the datum enabling signal to the input/output means of this entity only in the course of a window allocated to this entity, thus permitting access by this entity to the memory.

4. System according to Claim 3, **characterized in that** one (P1) of the auxiliary entities comprises a central processing unit of a microprocessor, **in that** the control means comprise inhibiting means (MH) which are able, in the presence of a memory access request signal emitted by the central processing unit in the course of a time window which is not allocated to it, to disable the internal operation of the central processing unit until the datum enabling signal is received.

## Patentansprüche

1. Verfahren zur Steuerung der verteilten Zugriffe auf einen Arbeitsspeicher, einem Verfahren, in welchem mehrere Peripherieeinheiten, die jeweils mit ihrem eigenen internen Taktsignal getaktet werden, auf den Speicher zugreifen können, **dadurch gekennzeichnet, daß**
aus der Gesamtheit der Peripherieeinheiten eine vorrangige Einheit (P2) definiert wird und die anderen Einheiten (P1,P3) als nachrangige Einheiten definiert werden, wobei der Speicher (MMV) ein Speicher mit einfachem Zugriff ist,
ein sich wiederholender Zeitrahmen (TR) ausgearbeitet wird, der von dem internen Taktsignal (CK2) der vorrangigen Einheit getaktet wird und in Zeitfenster (S1-S6) unterteilt ist, die mehrere Fenstergruppen bilden, die jeweils den Peripherieeinheiten zugewiesen sind, und
jeder Peripherieeinheit erlaubt wird, nur während der Fenster, die ihr zugewiesen sind, auf den Speicher zuzugreifen.

2. Verfahren nach Anspruch 1, in welchem eine (P1) der nachrangigen Einheiten eine Zentraleinheit (CPV) eines Mikroprozessors und mit dem Speicher verbundene Eingabe/Ausgabe-Einrichtungen (MES1) aufweist, die in den Speicher zu schreibende Daten oder aus dem Speicher zu holende und von der Zentraleinheit zu lesende Daten halten können, **dadurch gekennzeichnet, daß**
bei Anwesenheit eines Speicherzugriff-Anforderungssignals (C1), das von der Zentraleinheit während eines ihm nicht zugewiesenen Zeitfensters ausgesandt worden ist, die in den Eingabe/Ausgabe-Einrichtungen vorhandenen Daten während des nächsten, der Zentraleinheit zugewiesenen Zeitfensters freigegeben werden und der interne Betriebsablauf der Zentraleinheit bis zur dieser Freigabe eingefroren wird.

3. System zur Steuerung der verteilten Zugriffe auf einen Arbeitsspeicher, **dadurch gekennzeichnet, daß** es aufweist:
einen Areitsspeicher mit einfachem Zugriff (MMV), der mit einem Datenbus und einem Adreßbus verbunden ist,
mehrere Peripherieeinheiten (P1-P3), die in eine vorrangige Einheit und in nachrangige Einheiten eingeteilt sind, jeweils von ihrem eigenen internen Taktsignal getaktet werden, jeweils ein Speicherzugriff-Anforderungssignal ausgeben können und jeweils mit dem Datenbus und dem Adreßbus verbundene Eingabe/Ausgabe-Einrichtungen aufweisen, die Speichereinrichtungen aufweisen, die aus dem Speicher geholte Daten oder in den Speicher zu schreibende Daten halten können, und einen Steueranschluß aufweisen, um mindestens ein Freigabesignal zur Freigabe der in den Eingabe/Ausgabe-Einrichtungen gehaltenen Daten zu empfangen, und
eine Schnittstelle (IF), die aufweist:
eine Ablaufsteuerung (SQ), die von dem internen Taktsignal der vorrangigen Einheit getaktet wird, um einen sich wiederholenden Zeitrahmen auszuarbeiten, der in Zeitfenster unterteilt ist, die mehrere Fenstergruppen bilden, die jeweils den Peripherieeinheiten zugewiesen sind, und
Steuereinrichtungen (MC1-MC3), die in der Lage sind, als Antwort auf ein von einer Einheit herkommendes Zugriffsanforderungssignal das Datenfreigabesignal nur während eines Fensters, das dieser Einheit zugewiesen ist, zu den Eingabe/Ausgabe-Einrichtungen dieser Einheit auszugeben, um **dadurch** den Zugriff dieser Einheit auf den Speicher zu erlauben.

4. System nach Anspruch 3, **dadurch gekennzeichnet, daß** eine (P1) der nachrangigen Einheiten eine Mikroprozessor-Zentraleinheit aufweist, **dadurch**, daß die Steuereinrichtungen Hemmeinrichtungen (MH) aufweisen, die in der Lage sind, bei Anwesenheit eines Speicherzugriff-Anforderungssignals, das von der Zentraleinheit während eines Zeitfensters, das ihm nicht zugewiesen ist, ausgesandt worden ist, den internen Betriebsablauf der Zentraleinheit bis zum Empfang des Datenfreigabesignals einzufrieren.
